# EUROPEAN PATENT SPECIFICATION

(11) **EP 3 016 351 B1**
(45) Date of publication and mention of the grant of the patent: **07.03.2018**
(21) Application number: 14191543.9
(22) Date of filing: 03.11.2014
(51) Int. Cl.: H04L 29/08, H04L 12/40, H04J 3/00, H04L 12/417, H04J 3/24, H04Q 9/00

(54) **Method for operating a sensor arrangement with multiple sensor devices, sensor device, sensor arrangement and sensor system**
Verfahren zum Betrieb einer Sensoranordnung mit mehreren Sensorvorrichtungen, Sensorvorrichtung, Sensoranordnung und Sensorsystem
Procédé pour faire fonctionner un système de capteur avec plusieurs dispositifs de capteur, dispositif capteur, installation de capteur et système de capteur

(43) Date of publication of application: 04.05.2016
(73) Proprietor: Pepperl + Fuchs GmbH, 68307 Mannheim (DE)
(72) Inventor: Roth, Tobias, 92237 Sulzbach-Rosenberg (DE); Stumpf, Michael, 68309 Mannheim (DE)
(74) Representative: Banse, Klaus-Dieter

(56) References cited:
- EP-A1- 2 117 144
- EP-A2- 0 139 916
- US-A- 5 585 788
- US-A1- 2004 254 700
- US-A1- 2012 218 601
- US-A1- 2014 025 842
- US-B1- 6 216 172
- WEI LUN NG ET AL: "Performance Analysis of Wireless Control Area Network (WCAN) Using Token Frame Scheme", INTELLIGENT SYSTEMS, MODELLING AND SIMULATION (ISMS), 2012 THIRD INTERNATIONAL CONFERENCE ON, IEEE, 8 February 2012 (2012-02-08), pages 695-699, XP032138018, DOI: 10.1109/ISMS.2012.74 ISBN: 978-1-4673-0886-1
- NUNO PEREIRA ET AL: "WiDom: A Dominance Protocol for Wireless Medium Access", IEEE TRANSACTIONS ON INDUSTRIAL INFORMATICS, IEEE SERVICE CENTER, NEW YORK, NY, US, vol. 3, no. 2, 1 May 2007 (2007-05-01), pages 120-130, XP011182337, ISSN: 1551-3203, DOI: 10.1109/TII.2007.898461

## Description

### Technical field

The present invention relates to a sensor arrangement with multiple sensor devices and particularly to methods for synchronizing a multiplex operation of the sensor devices.

### Related art

Sensor devices are widely used for controlling and monitoring production facilities, e. g. for measuring distances, counting parts, sensing temperatures, detecting colors and the like. However, sensor devices usually have a limited sensing range, so that with respect to the needs of an actual application, sensor arrangements or sensor arrays including multiple sensor devices are commonly applied.

To cover a continuous common sensing, multiple sensor devices are usually arranged so that their sensing ranges overlap. Particularly for sensor devices emitting light, other kinds of radiation or sound waves, requirements regarding spacing and minimum inter-sensor distances cannot be satisfied since the neighboring sensor devices might interfere when operated simultaneously.

To avoid such interferences, multiple sensor devices in a sensor arrangement are operated in a synchronized manner. It is common to provide a multiplexing operation for sensor devices in the sensor arrangement, so that the sensor devices perform their sensing tasks successively according to a predefined activation order. It is known that the order in which the sensor devices perform their measurements depends on parameters, such as an address and a number of sensor devices in the sensor arrangement. These parameters need to be preset in each of the sensor devices.

Furthermore, it is e. g. known from documents DE 102 40 832 A1 and DE 10 2010 041 810 A1 to derive the order of operation of multiple sensor devices depending on a serial number. The serial number identifies each of the sensor devices and is stored therein. Furthermore, it is known to couple the sensor devices of the sensor array by means of a synchronization channel which allows a communication to selectively activate and deactivate the interconnected sensor devices.

Moreover, it is known that the activation order of the multiple sensor devices may be initially determined by a random waiting time after which each of the sensor devices tries to occupy a communication time slot to identify itself in the sensor arrangement, so that its turn in the activation order can be registered. However, the duration of such an initialization process essentially depends on the cycle time of each sensor device, so that a maximum duration for such an initialization process is undefined.

Particularly as the count of random numbers is limited, it may occur that multiple sensor devices keep on trying to occupy the same communication time slots to register themselves in the activation sequence, which causes the initialization process to be stuck for a longer period of time, so that the maximum duration of the initialization process cannot be exactly determined. However, it is usually mandatory for sensor arrangements to satisfy a given readiness delay, which cannot be guaranteed by the above method.

Document US 5,585,788 A discloses a data transmission system transmitting data between a plurality of electronic control units by means of a network bus. Data is transmitted on the network bus by a sequence of signal levels, one of which is dominant and one of which is recessive. Data transmission is performed by token messages sent by one of the electronic control units to another of the electronic control units by starting transferring an address of the destination node and, when a collision of the token messages sent by the electronic control units is detected, the transmission of the token message is inhibited and the message transmitting processing is carried out again, if the network bus is idle after a lapse of a set waiting time. The duration of the waiting time depends on an address of the electronic control unit.

Document US 6,216,172 B1 discloses a method for automatically allocating addresses in a controller area network including a plurality of bus subscribers. One of the bus subscribers serves as a controlling station for initiating address allocation. Each bus subscriber is assigned a unique serial number. On system power up, each bus subscriber generates a first random value for a provisional address, wherein on receiving a request to commence address allocation sent by the controlling station, a telegram claiming a provisional address dictated by the first random value is written into a sent buffer of each bus subscriber and a wait is initiated for authorization to access the bus and sending the telegram. If a bus subscriber receives the telegram claiming an address which fails to agree with its own provisional address, this address is entered into a list of accredited bus subscribers held in the memory of the receiving bus subscriber. If before sending its own telegram, the bus subscriber receives the telegram claiming an address which agrees with its own provisional address, a new first random value is generated for a provisional address and the telegram claiming this provisional address is written into the sent buffer. If the telegram claiming its own provisional address is sent before a telegram of some other bus subscriber claiming the same provisional address is received, its own provisional address is accepted as a final address in the list of accredited bus subscribers and deposited in a memory. On completion of address allocation, the controlling station requests all bus subscribers in sequence on the basis of the allocated addresses to send their serial numbers.

It is an object of the present invention to provide an initialization process in which sensor devices of a sensor arrangement can establish an activation order in a multiplexing operation without any user interaction. The activation order shall be defined and static, while the duration of the initialization process shall be limited to below a given readiness delay.

It is a further object of the invention to ensure that sensor devices can be easily added to and removed from the sensor arrangement at any time without affecting the multiplexing operation of the sensor arrangement.

### Summary of the invention

The above object has been achieved by the method for operating a sensor device in a sensor arrangement with multiple sensor devices according to claim 1 as well as by the sensor device, the sensor arrangement and the sensor system according to the further independent claims.

Further embodiments are indicated in the dependent claims.

According to a first aspect, a method for operating a sensor device in a sensor arrangement including multiple sensors interconnected by a common communication line is provided, comprising the steps of:
- serially transmitting data on the communication line, wherein data are transmitted on the communication line by applying a sequence of electrical levels, wherein the electrical levels include one dominant level and one or more subdominant levels, wherein only the application of the dominant level is able to override subdominant levels on the communication line;
- monitoring the communication line; and
- interrupting the transmitting of data and/or blocking the transmission of data, in case a dominant level exists on the communication line which has not been applied by the sensor device.

In an initialization mode, identification data is serially transmitted onto the communication line as a corresponding sequence of the electrical levels, wherein the identification data uniquely identify the sensor device, wherein the step of serially transmitting the identification data on the communication line is repeated as long as the identification data have not been fully transmitted over the communication line.

Each time a full transmission of identification data has been monitored, an address may be assigned and stored e.g. by a communication control unit, particularly together with information about the order of occurrence on the communication line.

One idea of the above method for operating a sensor device is that it allows to firstly negotiate an activation order for multiple sensor devices in an initialization mode and to secondly operate the multiple sensor devices in a measurement mode in a multiplex operation using only a single communication line. By providing a dominant electrical level on the communication line. which can be detected by all sensor devices connected, a negotiating and communication between the connected sensor devices is possible.

Moreover, in the initialization mode, if no transmission of identification data is monitored on the communication line for a predetermined time, the initialization mode may be terminated and a measurement mode may be started.

According to a further aspect, a method for operating a sensor arrangement including multiple sensor devices interconnected by a common communication line is provided, wherein each of the sensor devices
- serially transmits data on the communication line, wherein data are transmitted on the communication line by applying a sequence of electrical levels, wherein the electrical levels include one dominant level and one or more subdominant levels, wherein only the application of the dominant level is able to override subdominant levels on the communication line;
- monitors the communication line; and
- interrupts the transmission of data and/or blocks the transmission of data, in case a dominant level exists on the communication line which has not been applied by the sensor device,
- in an initialization mode, serially transmit identification data in successive time frames on the communication line as a corresponding sequence of the electrical levels, wherein the identification data uniquely identify the sensor device, repeat serially transmitting the identification data on the communication line as long as the identification data have not been fully transmitted over the communication line, and assign and store an address each time a full transmission of identification data has been monitored, particularly together with information about the order of occurrence on the communication line.

In the method for operating the sensor arrangement it may be provided that an initialization mode is simultaneously started in all of the sensor devices, particularly at a predetermined start-up time after powering up the sensor arrangement, wherein each sensor device starts serially transmitting identification data in successive time frames, wherein in each of the sensor devices an address generated by a common address assignment scheme is assigned to one or more of the sensor devices which have been able to fully transmit their respective identification data, wherein the assigned address is stored in conjunction with information about the order of occurrence during the initialization mode.

In the initialization mode, an activation order of the multiple sensor devices in a sensor arrangement is determined using an identification code of each sensor device to securely register each of the sensor devices and to further define each respective position in the activation order without the use of random waiting times or any other processes related to random numbers. The sensor devices are interconnected with a communication line which is able to carry at least two electrical levels, i. e. levels of an electrical quantity, such as voltage or current, wherein one of the electrical levels is defined as dominant. A dominant level applied by at least one of the sensor devices onto the communication line overrides all other electrical levels applied by the other sensor devices onto the communication line.

For the initialization mode, a number of sensor devices are interconnected via the communication line, so that after powering-up each of the sensor devices starts serially transmitting its identification data on the communication line at the same time. Alternatively or additionally, each sensor device may be configured to stop any transmission of the identification data when a subdominant level cannot be applied onto the communication line due to the existence of a dominant level on the communication line. Consequently, as each of the sensor devices starts trying to transmit its identification data onto the communication line within a time frame, those sensor devices will stop transmitting its identification data as soon as the identification data require the application of a subdominant level onto the communication line, while another of the sensor devices applies a dominant level related to its own identification data onto the communication line. Thereby, only the one sensor device having applied identification data which could be fully transmitted over the communication line is registered with a unique address with a predetermined rank in the order of occurrences of full transmissions of identification data. The unique address may be generated according to a common address assignment scheme which is identical for all sensor devices in the sensor arrangement. This process is repeated for all sensor devices, excluding those sensor devices which have been already registered, until the last of the sensor devices has been registered and its address has been associated.

The above method of automatically registering sensor devices by applying an address indicating a position of the order of occurrence during the initialization process has the advantage that no manual customization of the sensor devices is necessary. The unique identification based on the identification data and the address associated thereto results in a simplification of the automatic multiplexing operation. The order defined by the addresses is not random, and the maximum duration for the initialization process is limited to the interval required for negotiating the addresses. Thus, the initialization delay can be low and determined.

In a measurement mode of a sensor device, a measurement may be performed, wherein the measurement is started when it is determined by monitoring the communication line that token data received include or represents an address assigned to the respective sensor device, wherein the dominant level is applied onto the communication line when starting the measurement.

According to an embodiment, in the measurement mode, token data including an address assigned to a next sensor device and retrieved from an activation order list may be transmitted over the communication line upon completion of the measurement.

Furthermore, in the measurement mode, the token data including an address assigned to a next sensor device may be repeatedly transmitted until the application of a dominant level is determined on the communication line.

Moreover, in the method for operating the sensor arrangement, after completion of the initialization mode, a measurement mode may be set in which each sensor device which performs a measurement applies a dominant level on the communication line, wherein after the measurement of one of the sensor devices the respective sensor device transmits token data indicating an address of one of the next sensor devices according to an activation order which is related to the order of occurrence.

After the initialization process, each of the sensor devices has stored an address indicating its position in an activation order for the multiplex operation. If one sensor device has finished its measurement cycle, a token signal may be transmitted onto the communication line including the address of the sensor device which is next in the activation order. The token signal is accepted by the respective sensor device the transmitted address is associated to. The respective sensor device then applies a dominant level onto the communication line to acknowledge receipt of the token signal. Thereby, the respective sensor device is activated.

As preferably all addresses of the sensor devices of the sensor arrangement are stored in each of the sensor devices, a removal of a sensor device or a non-functional sensor device in the sensor arrangement is noticed based on the missing acknowledgement giving by applying the dominant level. The sensor device which transmitted the token signal can then use a next one of the addresses or the activation order until the addressed sensor device acknowledges by applying the dominant level and starts carrying out its own measurement.

According to a further aspect, a sensor device for a sensor arrangement is provided, comprising:
- a measurement unit for performing a measurement;
- an I/O driver for coupling to a communication line, wherein the I/O driver is configured to apply electrical levels onto the communication line for data transmission, wherein the electrical levels include one dominant level and one or more subdominant levels, wherein only the dominant level is able to override subdominant levels applied on the communication line; and

- a communication control unit configured to:
   ∘ serially transmit data via the I/O driver onto the communication line using the dominant level and one or more subdominant levels;
   ∘ permanently monitor the communication line to detect electrical levels; and
   ∘ interrupt the transmission of data, in case a dominant level exists on the communication line which has not been applied by the sensor device itself.
   ∘ in an initialization mode, serially transmit identification data in successive time frames on the communication line as a corresponding sequence of the electrical levels, wherein the identification data uniquely identify the sensor device, repeat serially transmitting the identification data on the communication line as long as the identification data have not been fully transmitted over the communication line, and assign and store an address each time a full transmission of identification data has been monitored, particularly together with information about the order of occurrence on the communication line.

It may be provided that the communication control unit, in an initialization mode, is further configured to
- serially transmit identification data onto the communication line as a corresponding sequence of electrical levels, wherein the identification data uniquely identify the sensor device, wherein particularly the serial transmission of identification data on the communication line is repeated as long as the identification data have not been fully transmitted over the communication line.

According to an embodiment, in an initialization mode, the communication control unit may be further configured to assign and store an address each time a full transmission of identification data has been monitored, and particularly to store the assigned address together with information about the order of occurrence on the communication line.

In a measurement mode, the communication control unit may be further configured to perform a measurement and to start the measurement when it is determined by monitoring the communication line that token data received include an address assigned to the sensor device, wherein the dominant level is applied onto the communication line when starting the measurement.

In a measurement mode, the communication control unit may be further configured to transmit token data including an address assigned to a next sensor device and retrieved from an activation order list over the communication line when the measurement has been completed, wherein the token data including an address assigned to a next sensor device are repeatedly transmitted until the application of a dominant level on the communication line is determined.

According to a further aspect, a sensor arrangement including a plurality of the above sensor devices interconnected by a common communication line is provided.

According to a further aspect, a sensor system comprising the above sensor arrangement and a control unit for receiving measurement data obtained by means of the measurement units of the sensor devices is provided.

### Brief description of the drawings

Embodiments are further described in more detail in conjunction with the accompanying drawings, in which:
- Figure 1: shows a sensor system with a sensor arrangement including multiple sensor devices;
- Figure 2: shows a schematic diagram of a sensor device of the sensor system of Figure 1;
- Figure 3: shows a flowchart illustrating the steps of the method for negotiating the order of activation of the sensor devices in a multiplex operation; and
- Figure 4: shows a flowchart illustrating the method for handing over the activation from one sensor device to a next in the order of activation.

### Description of embodiments

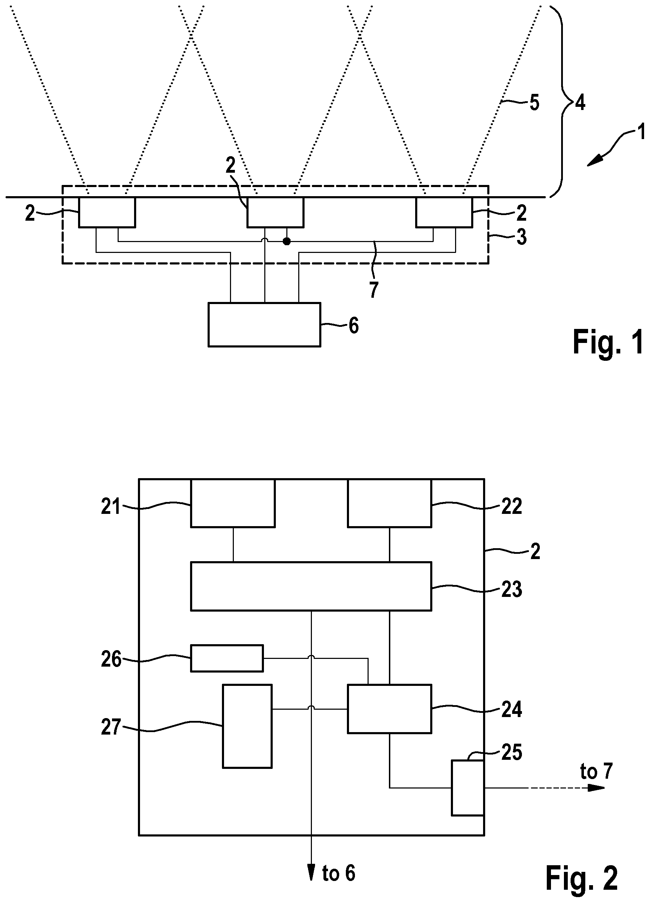

Figure 1 shows an exemplary sensor system 1 with e.g. three sensor devices 2 arranged as a sensor arrangement 3 or in a sensor array. In general, the number of sensor devices 2 in the sensor arrangement 3 is arbitrary for the described embodiment.

For example, the sensor arrangement 3 may be a part of a movable apparatus such as a robot, part of an automated manufacturing system or the like. The sensor arrangement 3 may be configured to detect the distance and/or the existence of an object within a common sensing area 4.

As the common sensing area 4 may be too wide to be covered by a single sensor device 2, the sensor devices 2 in the sensor arrangement 3 may be positioned such that their specific sensing ranges 5 add to form the larger common sensing area 4. Due to the often conical shape of the sensing ranges 5 of the individual sensor devices 2, the added specific sensing ranges 5 need to overlap in order to enhance the coverage of the common sensing area 4.

Sensor devices 2 for actively measuring distances and/or the existence of objects may utilize sonic (e. g. ultrasonic) or electromagnetic radiation (light) transmitters and respective receivers, e. g. to detect the propagation time or signal strength of the emitted sonic or electromagnetic signal reflected by an object and to derive information about the existence of an object and/or the distance of the object therefrom.

In general, sensor devices may apply sensing techniques based on the interaction of a sound signal, an electromagnetic signal or the like with an object. This sound signal or electromagnetic signal is emitted by the sensor device itself, so that based on the kind of the transmitter the shape of the specific sensing range 5 is determined by the coverage/directivity of the sound or electromagnetic signal in the environment of the sensor device.

Due to the overlapping of the specific sensing ranges 5, the sensing of the sensor devices 2 may interfere when performed simultaneously, since e.g. some of the signals emitted by one of the sensor devices 2 may be reflected from the object onto a receiver of a different sensor device 2 which at the same time also performs a measurement. This might lead to inaccurate measurement results. Therefore, the sensor devices 2 in the sensor arrangement 3 are often successively activated according to a multiplex operation. In other words, the sensor devices 2 which might interfere are individually and successively activated, so that the measurements do not interfere.

In Figure 2, an exemplary sensor device 2 is shown in more detail. The sensor device 2 has an ultrasonic transmitter 21 as a sound transmitting element and an ultrasonic receiver 22 as a sound receiving element. A measurement unit 23 is provided which is connected to the ultrasonic transmitter 21 and the ultrasonic receiver 22 to perform a measurement. The measurement is performed during a measurement time slot by transmitting an ultrasonic signal and, e. g., by measuring the propagation time of the emitted signal to and from the object to be measured. The propagation is in relation to the distance of the object from which the ultrasonic signal has been reflected.

The measurement result is provided to a control unit 6 to which all of the sensor devices 2 are connected. The control unit 6 collects all the measurement results and performs an adequate function, such as an evaluation of the measurement results.

A communication control unit 24 which determines the measurement time slot is further provided in the sensor device 2. The measurement time slot indicates a start time at which the respective sensor device 2 is to be activated and an end time at which the respective sensor device 2 is to be deactivated. At the end of the time slot in the respective sensor device 2 a next measurement time slot is active in a next sensor device 2. To synchronize the occurrences of active measurement time slots, a communication line 7 is provided which is coupled to each of the sensor devices 2.

The communication line 7 can be a single electrical line to which each of the sensor devices 2 is connected via a specific I/O driver 25.

The I/O driver 25 is configured to serially transmit data in the form of a series of electrical levels applied onto the communication line 7 when transmitting, and to receive electrical levels therefrom. If electrical levels are received by the I/O driver 25, the I/O driver 25 is further configured to translate the serially received signals to data forwarded to the communication control unit 24. Preferably, the number of electrical levels is 2, so that the data are serially transmitted as a binary signal; however, any number of electrical levels can be used to transmit the data via the communication line 7.

The electrical levels may be voltage levels, current levels or the like. Furthermore, the electrical levels may include one dominant level and one or more sub-dominant levels. The I/O driver 25 may be configured to, by applying a dominant level, override the application of a subdominant level of an electrical signal on the communication line 7 applied by one or more other sensor devices 2. This can be easily achieved by changing the impedance of the I/O driver 25 to low impedance when it applies the dominant level and to higher impedance when it applies subdominant levels.

The I/O driver 25 may be further configured to immediately stop data transmission onto the communication line 7 and to accordingly signal the stopping to the communication control unit 24 if a subdominant level has been tried to transmit on the communication line 7 by the I/O driver 25 and the subdominant level has been overridden by a dominant level applied by another sensor device 2.

In the following example, the serial signal applied on the communication line 7 is composed by consecutively applying two electrical levels, wherein the dominant level is a logical "1", such as a high voltage level, and the sub-dominant level is a logical "0", such as a low voltage level. However, a logical "0" could also be chosen as the dominant level.

A memory unit 27 is coupled with the communication control unit 24. The memory unit 27 is configured to store an address assigned to the respective sensor device 2 and the addresses of all sensor devices 2 in memory locations indicating the activation order thereof. Moreover, each of the sensor devices 2 has a permanent memory 26 to hold a unique identification code associated to each of the sensor devices 2.

The synchronization control unit 24 is configured to assign the measurement time slot to its respective measurement unit 23 depending on whether the associated address of the sensor device 2 is received via the communication line 7 so as to hand over the activation turn to the addressed sensor device 2.

In order to perform a multiplex operation, in which at least a part of the sensor devices 2 is activated successively, an activation order of the sensor devices 2 needs to be predefined.

To avoid a manual presetting of the activation order of the sensor devices 2 and to allow an automatic negotiating of the activation order between the sensor devices 2 coupled with each other via the communication line 7, an initialization mode is set, wherein an initialization process is carried out by the communication control unit 24 of each of the sensor devices 2 when powering up.

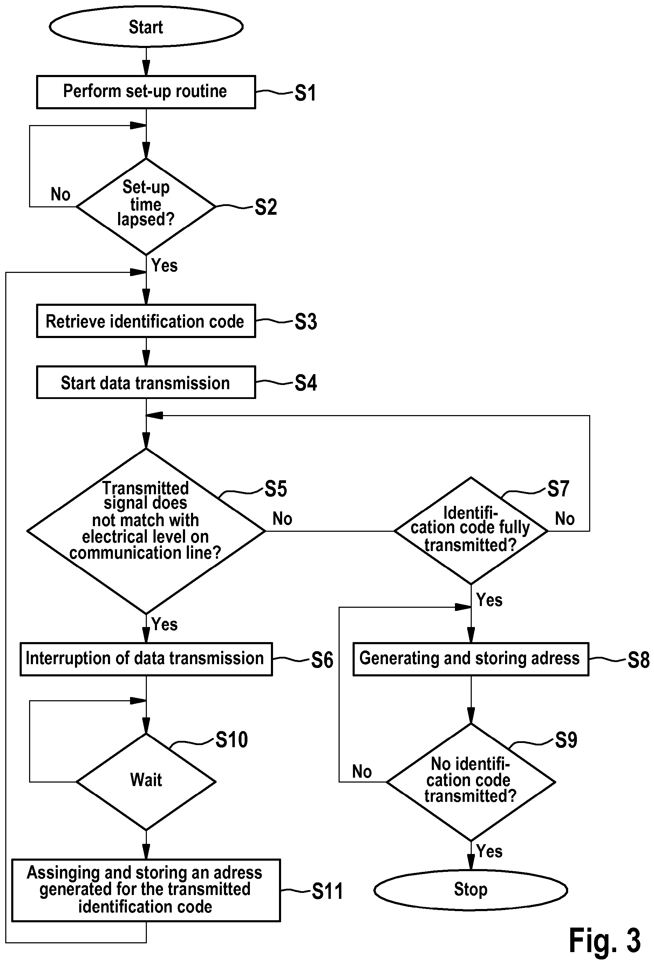

The initialization process carried out in the initialization mode is explained in more detail in conjunction with the flowchart of Figure 3. The initialization process is carried out in an interaction of all of the sensor devices 2. Internal processing in the sensor devices 2 may be synchronized to clock signals which may be substantially equal. Particularly, a serial transmission over the communication line 7 needs to be based on an identical frequency, i. e. an identical transmission data rate.

After powering-up the sensor system 1, so that each sensor device 2 is operating, a start-up routine is carried out in each of the sensor devices 2 in step S1. The start-up routine brings all of the sensor devices 2 into a full operational mode.

After the start-up routine has been completed, it is checked in step S2 whether a predetermined start-up time after powering-up has been achieved. The start-up time is predetermined and may be equal for each of the sensor devices 2, so that a timing synchronization is achieved. If in step S2 it is determined that the start-up time has not been lapsed, a loop is performed until the start-up time (alternative: Yes) is lapsed to continue the initialization process.

After the start-up time has been lapsed, the identification code held in the permanent memory 26, is read out from the permanent memory 26 by the communication control unit 24 and supplied to the I/O driver 25 as identification data. The identification data correspond to or are generated from the identification code. The I/O driver 25 serially transmits the identification data to the communication line 7 by means of the electrical levels. In other words, the identification data are translated to a serial signal having electrical levels interpreted as logical "1" and logical "0". The identification data may be serially transmitted by each of the sensor devices 2 according to an identical data rate.

During the signal transmission over the communication line 7 that has been started in step S4, the communication line 7 is simultaneously monitored to retrieve the identification data transmitted thereon. If in a step S5 the I/O driver 25 determines that the actual electrical level on the communication line 7 does not match the transmitted electrical level (alternative: Yes), the transmission process which has been started in step S3 is interrupted in step S6. Otherwise (alternative: No) it is checked in step S7 whether the identification data could be fully transmitted. As the identification data items permanently stored in the sensor devices 2 all have the same length (in bits or digits), each of the sensor devices 2 knows when the transmission of the identification data items of any of the sensor devices 2 has been terminated. If the identification data could not be fully transmitted, the process is continued with step S5 (alternative: No), otherwise (alternative: Yes) the process is continued with step S8.

In step S8 an address is generated, associated to the fully transmitted identification data and stored in the memory unit 27. The memory location of the assigned address indicates the activation order of the sensor devices 2 to be determined. Therefore, information about which addresses of other sensor devices 2 will be next in turn according to the activation order is available from the memory location of the stored address. For example, the generated addresses are stored in subsequent memory locations, so that the activation order can be defined by the order of storing the addresses in the memory unit 27. Other ways of keeping the order of address generation in the memory unit 27 are also possible.

A possible address assignment scheme may be counting the addresses from "1" (or any predefined number x) up to the number (count) of sensor devices 2 (or to x + number of sensor devices 2) coupled with the communication line 7 (or incrementing the addresses by 1,2... n). In other words, the first sensor device 2 which has been able to fully transmit its identification data is assigned with the address "1", the second sensor device 2 which has been able to fully transmit its identification data is assigned with the address "2" etc.

Subsequently to step S8, it is checked in step S9 whether no identification data items are transmitted by other sensor devices 2 on the communication line 7 for a predetermined time. If it is determined that no identification data items have been transmitted for the predetermined time (alternative: Yes) the initialization process is terminated and addresses have been assigned to all of the sensor devices 2. Otherwise (alternative: No), if a complete identification data item has been received, it is assigned with a new address according to the above address assignment scheme and stored in the memory unit 27 to obtain the order of generated and assigned addresses for all sensor devices 2 in step S8 and subsequently proceeded with step S9.

After an interruption of the data transmission of step S6, it is waited in step S10 until the identification data item of any of the sensor devices 2 has been fully transmitted.

All of the sensor devices 2 monitor the communication line 7, e. g. by means of the communication control unit 24, so that they have all received identification data of the one sensor device 2 which has been able to fully transmit its identification data. If it is determined in step S10 that the identification data have been fully received (alternative: yes) the process is continued with step S11.

In step S11, in case the communication control unit 24 of the sensor device 2 was not able to fully transmit its own identification data, the communication control unit 24 assigns an address newly generated according to the address assignment scheme, to the respective sensor device 2 which has been identified by the identification data fully transmitted via the communication line 7. The address assignment scheme is identical for all of the sensor devices 2. Thus, after each full transmission of identification data by another sensor device 2, all sensor devices 2 generate and assign and store the identical address, so that its position in the activation order of sensors devices 2 is determined.

Thereafter, the process is continued with step S3.

Each of the sensor devices 2 that has not yet been assigned with an address again starts transmitting its identification data in step S4. The sensor device 2 to which an address has already been assigned is merely passive, stays in the loop of steps S8 and S9, monitors/listens on the communication line 7 for further identification data items and after each set of fully transmitted identification data assigns an address according to the address assignment scheme to be stored together with information about the activation order. The assigned addresses are automatically brought into the activation order which corresponds to the order of their generation, i. e. the order in which the sensor devices 2 have been able to fully transmit their identification data via the communication line 7.

In the case two or more of the sensor devices 2 shall perform a measurement simultaneously while the other sensor devices 2 shall perform the measurements subsequently according to the multiplex operation, the sensor devices 2 which shall be perform measurement simultaneously can be provided with identification data items which are equal and result in a transmission of only dominant electrical levels onto the communication line 7, i.e. the logical "1". As the transmission of the identification data is synchronized, all of the sensor devices 2 having the same identification number will obtain the same address.

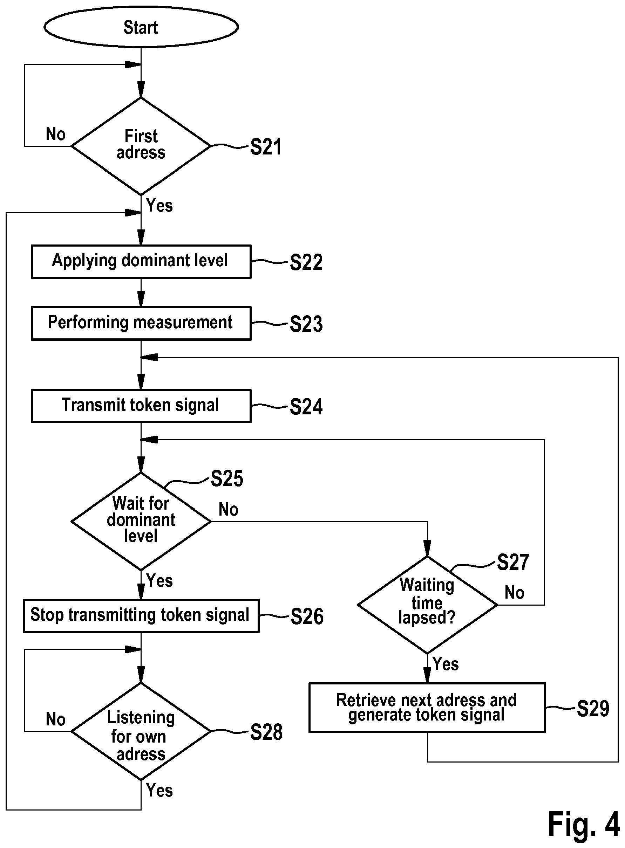

Figure 4 shows a flowchart indicating the steps carried out in a measurement mode after the initialization process has been terminated.

All sensor devices 2 have stored in their respective memory units 27 a list of addresses of sensor devices 2 which represent an activation order list including the addresses by which they can be addressed and which further indicate the activation order.

In step S21 it is checked whether the address indicated as first address in the activation order list belongs to the sensor device 2. If it is determined that the first address identifies the sensor device 2 (alternative: Yes) it is continued with step S22; otherwise (alternative: No) it is continued with step S21. The operation starts with the sensor device 2 that has been assigned to the first address in the stored list indicating the activation order.

In step S22 the determined sensor device 2 assigned to the first address applies a dominant level on the communication line 7, thereby indicating to the other sensor devices 2 that the determined sensor device 2 is activated for a measurement while all other sensor devices 2 shall be deactivated.

In step S23 the measurement is performed. The measurement result may be transmitted to the

After the measurement has been terminated, in step S24 a token signal is provided by the communication control unit 24 and transmitted via the communication line 7 which carries data including the address of the sensor device 2 which is next to perform a measurement according to the list of activation order stored in the memory unit 27.

As all sensor devices 2 listen on the communication line 7, the sensor device 2 which is assigned to the transmitted address takes over control and applies a dominant level onto the communication line 7, thereby blocking all other sensor devices 2 from transmitting their token signal.

Therefore in step S25 it is waited for the detection of the dominant level being applied on the communication line 7. If the dominant level being applied on the communication line 7 has been detected (alternative: Yes) the transmission of the token signal is terminated in step 26. Otherwise (alternative: No) it is continued in step S27.

In a step S28 following step S26 it is listened on the communication line 7 (the communication line 7 is monitored). If a token signal including the own address is detected, it is continued with step S22 by applying the dominant level. Otherwise it is continued with step S28 to form a waiting loop.

It is checked in step S27 whether a predetermined waiting time has been lapsed. If positive (alternative: yes), a next address from the list of activation order is retrieved and a corresponding token signal is generated in step S29. This token signal is transmitted on the signal line 7 via a continuation of the process of step S24. If the predetermined waiting time has not been lapsed, it is returned to step S25.

Thus, the token signal is transmitted by the sensor device 2 which is momentarily active and the sensor device 2 which identifies the address in the token as its own address acknowledges the address by applying a logical "1" as the dominant electrical level on the communication line 7. In this way, a further transmission of token signals is blocked and the turn is handed over to the acknowledging sensor device 2. Hence, the sensor device 2 whose address corresponds to the address transmitted by the token signal becomes the active sensor device 2.

The change of activation between the sensor devices 2 is tolerant to failures in case one or more of the sensor devices 2 should fail. If the token signal sent by one of the sensor devices 2 is not acknowledged by at least one of the other devices 2, it can be detected by the missing acknowledgement for the predetermined time that the respective sensor device 2 is not available. The sensor device 2 that has been sent the token signal then remains the active sensor device 2 and is responsible for transmitting another token signal including a next address in the activation order list until the acknowledgement of the addressed sensor device 2 and the activation is handed over as described above.

If a further sensor device 2 is added to an existing sensor array 3, in which the negotiation of the addresses during the initialization mode has already been performed, the newly added sensor device 2 may be configured to disturb the transmission of the token signal by applying a constant dominant electrical level onto the communication line 7. As no negotiating will occur, this can be recognized by each of the sensor devices 2 which in response all initiate a reset, so that the initialization process will be carried out from the beginning in a synchronized manner.

### Reference list

- 1: sensor system
- 2: sensor device
- 21: transmitter
- 22: receiver
- 23: measurement unit
- 24: communication control unit
- 25: I/O driver
- 26: permanent memory
- 27: memory unit

- 3: sensor arrangement
- 4: common sensing area
- 5: sensing range
- 6: control unit
- 7: communication line

## Claims

1. Method for operating a sensor device (2) in a sensor arrangement (3) including multiple sensors interconnected by a common communication line (7), comprising the steps of:
- serially transmitting (S4) data on the communication line (7), wherein data are transmitted on the communication line (7) by applying a sequence of electrical levels, wherein the electrical levels include one dominant level and one or more subdominant levels, wherein only the application of the dominant level is capable of overriding subdominant levels on the communication line (7);
- monitoring (S5) the communication line (7); and
- interrupting (S6) the transmission of data and/or blocking the transmission of data, in case a dominant level exists on the communication line (7) which has not been applied by the sensor device (2), **characterized by** an initialization mode wherein identification data are serially transmitted in successive time frames on the communication line (7) as a corresponding sequence of the electrical levels, wherein the identification data uniquely identify the sensor device (2),
wherein the step of serially transmitting (S4) the identification data on the communication line (7) is repeated as long as the identification data have not been fully transmitted over the communication line (7),
wherein, in the initialization mode, each time a full transmission of identification data has been monitored, an address is assigned and stored (S11), particularly together with information about the order of occurrence on the communication line (7).

2. Method according to claim 1, wherein, in the initialization mode, if no transmission of identification data is monitored on the communication line (7) for a predetermined time, the initialization mode is terminated and a measurement mode is started.

3. Method according to any of the claims 1 to 2, wherein in a measurement mode a measurement (S23) is performed, wherein the measurement is started when it is determined by the monitoring the communication line (7) that token data received include an address assigned to the sensor device (2), wherein when starting the measurement the dominant level is applied onto the communication line (7).

4. Method according to claim 3, wherein, in the measurement mode, token data including an address assigned to a next sensor device (2) and retrieved from an activation order list are transmitted (S24) over the communication line (7) upon completion of the measurement.

5. Method according to claim 4, wherein, in the measurement mode, the token data including an address assigned to a next sensor device (2) are repeatedly transmitted until the application of a dominant level is determined on the communication line (7).

6. Method for operating a sensor arrangement (3) including multiple sensor devices (2) interconnected by a common communication line (7), wherein each of the sensor devices (2)
- serially transmits (S4) data on the communication line (7), wherein data are transmitted on the communication line (7) by applying a sequence of electrical levels, wherein the electrical levels include one dominant level and one or more subdominant levels, wherein only the dominant level is capable of overriding subdominant levels on the communication line (7);
- monitors (S5) the communication line (7); and
- interrupts (S6) the transmission of data and/or blocks the transmission of data, in case a dominant level exists on the communication line (7) which has not been applied by the sensor device (2), **characterized by** an initialization mode wherein each of the sensor devices (2) serially transmits identification data in successive time frames on the communication line (7) as a corresponding sequence of the electrical levels, wherein the identification data uniquely identify the sensor device (2), repeat serially transmitting the identification data on the communication line (7) as long as the identification data have not been fully transmitted over the communication line (7), and assign and store an address each time a full transmission of identification data has been monitored, particularly together with information about the order of occurrence on the communication line (7).

7. Method according to claim 6, wherein an initialization mode is simultaneously started in all of the sensor devices (2), particularly at a predetermined start-up time after powering up the sensor arrangement (3), wherein each sensor device (2) starts serially transmitting identification data in successive time frames, wherein in each of the sensor devices (2) an address generated by a common address assignment scheme is assigned to one or more of the sensor devices (2) which have been able to fully transmit their respective identification data, wherein the assigned address is stored in conjunction with information about the order of occurrence during the initialization mode.

8. Method according to claim 7, wherein after completion of the initialization mode a measurement mode is set in which each sensor device (2) which performs a measurement applies a dominant level on the communication line (7), wherein after the measurement of one of the sensor devices (2) the respective sensor device (2) transmits token data indicating an address of one of the next sensor devices (2) according to an activation order which is related to the order of occurrence.

9. Sensor device (2) for a sensor arrangement (3), comprising:
- a measurement unit (23) for performing a measurement;
- an I/O driver (25) for coupling to a communication line (7), wherein the I/O (25) driver is configured to apply electrical levels onto the communication line (7) for transmission, wherein the electrical levels include one dominant level and one or more subdominant levels, wherein only the application of the dominant level is able to override subdominant levels applied on the communication line (7); and
- a communication control unit (24) configured to:
∘ serially transmit data via the I/O driver (25) onto the communication line (7);
∘ monitor the communication line (7); and
∘ interrupt the transmission of data and/or blocking the transmission of data, in case a dominant level exists on the communication line (7) which has not been applied by the sensor device (2), **characterized in that** said communication control unit (24) is further configured to, in an initialization mode, serially transmit identification data in successive time frames on the communication line (7) as a corresponding sequence of the electrical levels, wherein the identification data uniquely identify the sensor device (2), to repeat serially transmitting the identification data on the communication line (7) as long as the identification data have not been fully transmitted over the communication line (7), and to assign and store an address each time a full transmission of identification data has been monitored, particularly together with information about the order of occurrence on the communication line (7).

10. Sensor device (2) according to any of the claims 8 to 9, wherein, in a measurement mode, the communication control unit (24) is further configured to perform a measurement and to start the measurement when it is determined by monitoring the communication line (7) that token data received include an address assigned to the sensor device (2), wherein the dominant level is applied onto the communication line (7) when starting the measurement.

11. Sensor arrangement (3) including a plurality of sensor devices (2) according to any of the claims 9 to 10 interconnected by a common communication line (7).

12. Sensor system (1) comprising a sensor arrangement (3) according to claim 11 and a control unit (6) for receiving measurement data obtained by means of the measurement units (23) of the sensor devices (2).

## Patentansprüche

1. Verfahren zum Betreiben einer Sensoreinrichtung (2) in einer Sensoranordnung (3) mit mehreren Sensoren, die durch eine gemeinsame Kommunikationsverbindung (7) verbunden sind, mit den Schritten:
- serielles Übertragen (S4) von Daten über die Kommunikationsverbindung (7), wobei Daten über die Kommunikationsverbindung (7) übertragen werden, indem eine Abfolge von elektrischen Niveaus angelegt wird, wobei die elektrischen Niveaus ein dominantes Niveau und ein oder mehrere unterdominante Niveaus umfassen, wobei nur die Anwendung des dominanten Niveaus in der Lage ist, unterdominante Niveaus auf der Kommunikationsverbindung (7) zu überschreiben;
- Überwachen (S5) der Kommunikationsverbindung (7); und
- Unterbrechen (S6) der Übertragung von Daten und/oder das Blockieren der Übertragung von Daten, wenn ein dominantes Niveau auf der Kommunikationsverbindung (7) existiert, das nicht durch die Sensoreinrichtung (2) angelegt worden ist,
**gekennzeichnet durch** einen Initialisierungsmodus, wobei Identifikationsdaten seriell in aufeinanderfolgenden Zeitfenstern über die Kommunikationsverbindung (7) als eine entsprechende Abfolge von elektrischen Niveaus übertragen werden, wobei die Identifizierungsdaten die Sensoreinrichtung (2) eindeutig identifizieren,
wobei der Schritt des seriellen Übertragens (S4) der Identifikationsdaten über die Kommunikationsverbindung (7) so lange wiederholt wird, wie die Identifikationsdaten nicht vollständig über die Kommunikationsverbindung (7) übertragen worden sind, wobei in dem Initialisierungsmodus jedes Mal, wenn eine vollständige Übertragung der Identifikationsdaten beobachtet worden ist, eine Adresse zugeordnet und gespeichert (S11) wird, insbesondere zusammen mit einer Information über die Reihenfolge des Auftretens auf der Kommunikationsverbindung (7).

2. Verfahren nach Anspruch 1, wobei, wenn keine Übertragung von Identifikationsdaten in dem Initialisierungsmodus auf der Kommunikationsverbindung (7) für eine vorbestimmte Zeitdauer beobachtet wird, der Initialisierungsmodus beendet wird und der Messungsmodus gestartet wird.

3. Verfahren nach einem der Ansprüche 1 bis 2, wobei in einem Messungsmodus eine Messung (S23) ausgeführt wird, wobei die Messung gestartet wird, wenn durch das Überwachen der Kommunikationsverbindung (7) festgestellt wird, dass empfangene Tokendaten eine Adresse, die der Sensorenrichtung (2) zugeordnet ist, enthalten, wobei, wenn die Messung gestartet wird, das dominante Niveau auf der Kommunikationsverbindung (7) angelegt wird.

4. Verfahren nach Anspruch 3, wobei die Tokendaten, die eine Adresse, die einer nächsten Sensoreinrichtung (2) zugeordnet sind, enthalten und von einer Aktivierungsordnungsliste abgerufen werden, in dem Messungsmodus über die Kommunikationsverbindung (7) nach dem Beenden der Messung übertragen werden (S24).

5. Verfahren nach Anspruch 4, wobei die Tokendaten, die eine Adresse enthalten, die einer nächsten Sensoreinrichtung (2) zugeordnet sind, in dem Messungsmodus wiederholt übertragen werden, bis die Anwendung eines dominanten Niveaus auf der Kommunikationsverbindung (7) festgestellt wird.

6. Verfahren zum Betreiben einer Sensoranordnung (3) mit mehreren Sensoreinrichtungen (2), die über eine gemeinsame Kommunikationsverbindung (7) verbunden sind, wobei jede der Sensoreinrichtungen (2)
- seriell Daten über die Kommunikationsverbindung (7) überträgt (S4), wobei Daten über die Kommunikationsverbindung (7) übertragen werden, indem eine Abfolge von elektrischen Niveaus angewendet wird, wobei die elektrischen Niveaus ein dominantes Niveau und ein oder mehrere unterdominante Niveaus umfassen, wobei nur das dominante Niveau in der Lage ist, die unterdominanten Niveaus auf der Kommunikationsverbindung (7) zu überschreiben;
- die Kommunikationsverbindung (7) überwacht (S5); und
- die Übertragung von Daten unterbricht (S6) und/oder die Übertragung von Daten blockiert im Fall, dass ein dominantes Niveau auf der Kommunikationsverbindung (7) anliegt, das nicht durch die Sensoreinrichtung (2) angelegt worden ist,
**gekennzeichnet durch** einen Initialisierungsmodus, wobei jede der Sensoreinrichtungen (2)
seriell Identifikationsdaten in aufeinanderfolgenden Zeitfenstern über die Kommunikationsverbindung (7) als eine entsprechende Abfolge von elektrischen Niveaus überträgt, wobei die Identifikationsdaten eindeutig die Sensoreinrichtung (2) identifizieren,
wiederholt die Identifikationsdaten seriell über die Kommunikationsverbindung (7) überträgt, solange die Identifikationsdaten nicht vollständig über die Kommunikationsverbindung (7) übertragen worden sind, und
eine Adresse zuordnet und speichert, jedes Mal, wenn eine vollständige Übertragung von Identifikationsdaten beobachtet worden ist, insbesondere gemeinsam mit einer Information über die Reihenfolge des Auftretens auf der Kommunikationsverbindung (7).

7. Verfahren nach Anspruch 6, wobei ein Initialisierungsmodus gleichzeitig in jeder der Sensoreinrichtungen (2) gestartet wird, insbesondere zu einer vorbestimmten Start-up-Zeit nach dem Einschalten der Sensoranordnung (3), wobei jede Sensoreinrichtung (2) das serielle Übertragen der Identifikationsdaten in aufeinanderfolgenden Zeitfenstern startet, wobei in jeder der Sensoreinrichtungen (2) eine Adresse, die durch ein gemeinsames Adresszuordnungsschema erzeugt wird, einer oder mehreren der Sensoreinrichtungen (2) zugeordnet wird, die in der Lage waren, ihre entsprechenden Identifikationsdaten vollständig zu übertragen, wobei die zugeordnete Adresse in Verbindung mit einer Information über die Reihenfolge des Auftretens während des Initialisierungsmodus gespeichert wird.

8. Verfahren nach Anspruch 7, wobei nach dem Beenden des Initialisierungsmodus ein Messungsmodus eingestellt wird, in dem jede Sensoreinrichtung (2), die eine Messung durchführt, ein dominantes Niveau auf der Kommunikationsverbindung (7) anlegt, wobei nach der Messung einer der Sensoreinrichtungen (2) die entsprechende Sensoreinrichtung (2) Tokendaten überträgt, die eine Adresse von jeder der nächsten Sensoreinrichtungen (2) gemäß einer Aktivierungsreihenfolge, die einen Bezug zur Reihenfolge des Auftretens aufweist, angibt.

9. Sensoreinrichtung (2) für eine Sensoranordnung (3), umfassend:
- eine Messungseinheit (23) zum Ausführen einer Messung;
- einen I/O-Treiber (25) zum Verbinden mit einer Kommunikationsverbindung (7), wobei der I/O-Treiber (25) ausgebildet ist, um elektrische Niveaus auf die Kommunikationsverbindung (7) zum Übertragen anzulegen, wobei die elektrischen Niveaus ein dominantes Niveau und ein oder mehrere unterdominante Niveaus umfasst, wobei nur die Anwendung des dominanten Niveaus in der Lage ist, unterdominante Niveaus, die auf der Kommunikationsverbindung (7) angelegt sind, zu überschreiben; und
eine Kommunikationssteuereinheit (24), die ausgebildet ist, um
- seriell Daten über den I/O-Treiber (25) auf die Kommunikationsverbindung (7) zu übertragen;
- die Kommunikationsverbindung (7) zu überwachen; und
- die Übertragung von Daten zu unterbrechen und/oder die Übertragung von Daten zu blockieren, wenn ein dominantes Niveau auf der Kommunikationsverbindung (7) existiert, das nicht durch die Sensoreinrichtung (2) angelegt worden ist,
**gekennzeichnet dadurch, dass** die Kommunikationssteuereinheit (24) weiterhin ausgebildet ist, um in einem Initialisierungsmodus Identifikationsdaten in aufeinanderfolgenden Zeitfenstern über die Kommunikationsverbindung (7) als die entsprechende Sequenz von elektrischen Niveaus zu übertragen, wobei die Identifikationsdaten eindeutig die Sensoreinrichtung (2) identifizieren, eine serielle Übertragung der Identifikationsdaten über die Kommunikationsverbindung zu wiederholen, solange die Identifikationsdaten noch nicht vollständig über die Kommunikationsverbindung (7) übertragen worden sind, und eine Adresse zuzuordnen und zu speichern, jedes Mal, wenn eine vollständige Übertragung der Identifikationsdaten beobachtet worden ist, insbesondere gemeinsam mit einer Information über die Reihenfolge des Auftretens auf der Kommunikationsverbindung (7).

10. Sensoreinrichtung (2) gemäß einem der Ansprüche 8 bis 9, wobei in einem Messungsmodus die Kommunikationssteuereinheit (24) weiterhin ausgebildet ist, um eine Messung auszuführen und die Messung zu starten, wenn durch Überwachen der Kommunikationsverbindung (7) festgestellt wird, dass empfangene Tokendaten eine Adresse, die der Sensoreinrichtung (2) zugeordnet ist, enthalten, wobei das dominante Niveau auf der Kommunikationsverbindung (7) angelegt wird, wenn die Messung gestartet wird.

11. Sensoranordnung (3) mit einer Mehrzahl von Sensoreinrichtungen (2) gemäß einem der Ansprüche 9 bis 10, die durch eine gemeinsame Kommunikationsverbindung (7) verbunden sind.

12. Sensorsystem (1) mit einer Sensoranordnung (3) nach Anspruch 11 und einer Steuereinheit (6) zum Empfangen von Messungsdaten, die mit Hilfe der Messungseinheiten (23) der Sensoreinrichtungen (2) erhalten wurden.

## Revendications

1. Procédé de fonctionnement d'un dispositif capteur (2) dans un agencement de capteurs (3) comprenant plusieurs capteurs interconnectés par une ligne de communication commune (7), comprenant les étapes :
- de transmission en série (S4) de données sur la ligne de communication (7), les données étant transmises sur la ligne de communication (7) par application d'une séquence de niveaux électriques, les niveaux électriques comprenant un niveau dominant et un ou plusieurs niveaux sous-dominants, seule l'application du niveau dominant pouvant avoir la priorité sur des niveaux sous-dominants sur la ligne de communication (7) ;
- de surveillance (S5) de la ligne de communication (7) ; et
- d'interruption (S6) de la transmission de données et/ou de blocage de la transmission de données, dans le cas où un niveau dominant est présent sur la ligne de communication (7), qui n'a pas été appliqué par le dispositif capteur (2),
**caractérisé par** un mode d'initialisation dans lequel des données d'identification sont transmises en série dans des trames temporelles successives sur la ligne de communication (7) en tant que séquence correspondante des niveaux électriques, les données d'identification identifiant de manière unique le dispositif capteur (2), l'étape de transmission en série (S4) des données d'identification sur la ligne de communication (7) étant répétée tant que les données d'identification n'ont pas été, entièrement transmises sur la ligne de communication (7),
dans le mode d'initialisation, chaque fois qu'une transmission complète de données d'identification a été surveillée, une adresse étant attribuée et mémorisée (S11), en particulier conjointement avec des informations sur l'ordre d'apparition sur la ligne de communication (7).

2. Procédé selon la revendication 1, dans lequel, dans le mode d'initialisation, si aucune transmission de données d'identification n'est surveillée sur la ligne de communication (7) pendant une durée prédéterminée, le mode d'initialisation est terminé et un mode de mesure est démarré.

3. Procédé selon l'une quelconque des revendications 1 à 2, dans lequel, dans un mode de mesure, une mesure (S23) est effectuée, la mesure étant démarrée lorsque la surveillance de la ligne de communication (7) détermine que des données de jeton reçues comprennent une adresse attribuée au dispositif capteur (2), le niveau dominant étant appliqué sur la ligne de communication (7) lors du démarrage de la mesure.

4. Procédé selon la revendication 3, dans lequel, dans le mode de mesure, des données de jeton comprenant une adresse attribuée à un dispositif capteur suivant (2) et extraites d'une liste d'ordres d'activation sont transmises (S24) sur la ligne de communication (7) lors de l'achèvement de la mesure.

5. Procédé selon la revendication 4, dans lequel, dans le mode de mesure, les données de jeton comprenant une adresse attribuée à un dispositif capteur suivant (2) sont transmises de façon répétée jusqu'à ce que l'application d'un niveau dominant soit déterminée sur la ligne de communication (7).

6. Procédé de fonctionnement d'un agencement de capteurs (3) comprenant plusieurs dispositifs capteurs (2) interconnectés par une ligne de communication commune (7), procédé dans lequel chacun des dispositifs capteurs (2)
- transmet en série (S4) des données sur la ligne de communication (7), les données étant transmises sur la ligne de communication (7) par application d'une séquence de niveaux électriques, les niveaux électriques comprenant un niveau dominant et un ou plusieurs niveaux sous-dominants, seul le niveau dominant pouvant avoir la priorité sur des niveaux sous-dominants sur la ligne de communication (7) ;
- surveille (S5) la ligne de communication (7) ; et
- interrompt (S6) la transmission de données et/ou bloque la transmission de données, dans le cas où un niveau dominant est présent sur la ligne de communication (7), qui n'a pas été appliqué par le dispositif capteur (2),
**caractérisé par** un mode d'initialisation dans lequel chacun des dispositifs capteurs (2) transmet en série des données d'identification dans des trames temporelles successives sur la ligne de communication (7) en tant que séquence correspondante des niveaux électriques, les données d'identification identifiant de manière unique le dispositif capteur (2), répète la transmission en série des données d'identification sur la ligne de communication (7) tant que les données d'identification n'ont pas été entièrement transmises sur la ligne de communication (7), et affecte et mémorise une adresse chaque fois qu'une transmission complète de données d'identification a été surveillée, en particulier conjointement avec des informations sur l'ordre d'apparition sur la ligne de communication (7).

7. Procédé selon la revendication 6, dans lequel un mode d'initialisation est démarré simultanément dans tous les dispositifs capteurs (2), en particulier à un instant de démarrage prédéterminé après la mise sous tension de l'agencement de capteurs (3), chaque dispositif capteur (2) démarrant la transmission en série de données d'identification dans des trames temporelles successives, dans chacun des dispositifs capteurs (2), une adresse générée par un plan d'attribution d'adresse commun étant attribuée à un ou plusieurs des dispositifs capteurs (2) qui ont pu transmettre complètement leurs données d'identification respectives, l'adresse attribuée étant mémorisée conjointement avec des informations sur l'ordre d'apparition pendant le mode d'initialisation.

8. Procédé selon la revendication 7, dans lequel après l'achèvement du mode d'initialisation, un mode de mesure est établi dans lequel chaque dispositif capteur (2) qui effectue une mesure applique un niveau dominant sur la ligne de communication (7), après la mesure de l'un des dispositifs capteurs (2), le dispositif capteur respectif (2) transmettant des données de jeton indiquant une adresse de l'un des dispositifs capteurs suivants (2) en fonction d'un ordre d'activation qui est lié à l'ordre d'apparition.

9. Dispositif capteur (2), destiné à un agencement de capteurs (3), comprenant :
- une unité de mesure (23) destinée à effectuer une mesure ;
- un circuit d'entrée/sortie (25) destiné à être couplé à une ligne de communication (7), le circuit d'entrée/sortie (25) étant conçu pour appliquer des niveaux électriques sur la ligne de communication (7) pour la transmission, les niveaux électriques comprenant un niveau dominant et un ou plusieurs niveaux sous-dominants, seule l'application du niveau dominant pouvant avoir la priorité sur des niveaux sous-dominants appliqués sur la ligne de communication (7) ; et
- une unité de commande de communication (24) conçue pour :
∘ transmettre en série des données par l'intermédiaire d'un circuit pilote d'entrée/sortie (25) sur la ligne de communication (7) ;
∘ surveiller la ligne de communication (7) ; et
∘ interrompre la transmission de données et/ou le blocage de la transmission de données, dans le cas où un niveau dominant est présent sur la ligne de communication (7), qui n'a pas été appliqué par le dispositif capteur (2),
**caractérisé en ce que** ladite unité de commande de communication (24) est en outre conçue pour, dans un mode d'initialisation, transmettre en série des données d'identification dans des trames temporelles successives sur la ligne de communication (7) en tant que séquence correspondante des niveaux électriques, les données d'identification identifiant de manière unique le dispositif capteur (2), répéter la transmission en série des données d'identification sur la ligne de communication (7) tant que les données d'identification n'ont pas été entièrement transmises sur la ligne de communication (7), et affecter et mémoriser une adresse chaque fois qu'une transmission complète de données d'identification a été surveillée, en particulier conjointement avec des informations sur l'ordre d'apparition sur la ligne de communication (7).

10. Dispositif capteur (2) selon l'une quelconque des revendications 8 à 9, dans lequel, dans un mode de mesure, l'unité de commande de communication (24) est en outre conçue pour effectuer une mesure et démarrer la mesure lorsque la surveillance de la ligne de communication (7) détermine que des données de jeton reçues comprennent une adresse attribuée au dispositif capteur (2), le niveau dominant étant appliqué sur la ligne de communication (7) lors du démarrage de la mesure.

11. Agencement de capteurs (3) comprenant une pluralité de dispositifs capteurs (2) selon l'une quelconque des revendications 9 à 10 interconnectés par une ligne de communication commune.

12. Système de capteur (1) comprenant un agencement de capteur (3) selon la revendication 11 et une unité de commande (6) destinée à recevoir des données de mesure obtenues au moyen des unités de mesure (23) des dispositifs capteurs (2).
